# EUROPEAN PATENT APPLICATION

(11) **EP 2 039 484 A1**
(43) Date of publication of application: **25.03.2009**
(21) Application number: 07017932.0
(22) Date of filing: 13.09.2007
(51) Int. Cl.: B27B 21/04, B23D 59/00

(54) **Handsaw with detachably mounted alignment and calibration device**

(71) Applicant: Hsu, Hung-Chi, Tainan County (TW); Hsu, Hung-Lung, Tainan County (TW)
(72) Inventor: Hsu, Hung-Chi, Tainan County (TW); Hsu, Hung-Lung, Tainan County (TW)
(74) Representative: Reichel, Wolfgang

(57) **Abstract**

A handsaw includes a saw body (1), and an alignment and calibration device (2) detachably mounted on the saw body. The saw body includes a handle (12) and a blade (11) mounted on the handle. The alignment and calibration device includes a housing (21) detachably mounted on the handle of the saw body, a light emitting member (23) mounted on the housing to emit a linear light beam outwardly, a plurality of adjusting screws (26) adjustably mounted on a first side of the housing, and a level (27) mounted on a second side of the housing. Thus, the alignment and calibration device is combined with the saw body to guide the sawing direction of the blade and is operated individually to form a vertical indication line, thereby enhancing the versatility of the handsaw.

## Description

The present invention relates to a handsaw and, more particularly, to a handsaw for sawing a workpiece, such as a wooden material.

A conventional handsaw comprises a handle, and a blade mounted on the handle. In practice, a worker can move the blade in the direction indicated by a sawing line drawn on a workpiece so as to cut the workpiece according to the sawing line of the workpiece. However, the blade is easily vibrated or inclined during the sawing process due to an unevenly distributed force applied by the worker, so that the blade is easily deflected from the sawing line of the workpiece, thereby greatly decreasing the working efficiency of the blade.

In accordance with the present invention, there is provided a handsaw, comprising a saw body, the saw body including a handle and a blade mounted on the handle, characterized by an alignment and calibration device detachably mounted on the saw body, the alignment and calibration device including a housing detachably mounted on the handle of the saw body, a light emitting member mounted on the housing to emit a linear light beam outwardly, a plurality of adjusting screws adjustably mounted on a first side of the housing, and a level mounted on a second side of the housing.

The primary objective of the present invention is to provide a handsaw having alignment and calibration functions.

Another objective of the present invention is to provide a handsaw, wherein the alignment and calibration device is combined with the saw body to guide the sawing direction of the blade and is operated individually to form a vertical indication line, thereby enhancing the versatility of the handsaw.

A further objective of the present invention is to provide a handsaw, wherein when the alignment and calibration device is combined with the saw body, the linear light beam of the light emitting member and the lower edge of the blade form a guide line which is in alignment with the sawing line of the workpiece to guide the sawing direction of the blade, so that a worker can move the blade in the direction indicated by the sawing line of the workpiece by guidance of the linear light beam of the light emitting member so as to cut the workpiece exactly and smoothly, thereby facilitating the worker sawing the workpiece, and thereby enhancing the working efficiency of the blade.

A further objective of the present invention is to provide a handsaw, wherein when the alignment and calibration device is detached from the saw body and operated individually, the linear light beam of the light emitting member is projected onto an object to form a vertical indication line to facilitate the work marking the vertical indication line without needing aid of an indication tool.

Further benefits and advantages of the present invention will become apparent after a careful reading of the detailed description with appropriate 20 reference to the accompanying drawings.

In the drawings:
Fig. 1 is a perspective view of a handsaw in accordance with the preferred embodiment of the present invention.
Fig. 2 is an exploded perspective view of the handsaw as shown in Fig. 1.
Fig. 3 is a schematic operational view of the handsaw as shown in Fig. 1 in use.
Fig. 4 is a perspective view of an alignment and calibration device of the handsaw as shown in Fig. 1.
Fig. 5 is a front cross-sectional view of the alignment and calibration 10 device of the handsaw as shown in Fig. 4.
Fig. 6 is a top view of a level of the alignment and calibration device of the handsaw as shown in Fig. 5.
Fig. 7 is a schematic operational view of the alignment and calibration device of the handsaw as shown in Fig. 5.
Fig. 8 is a top view of the level of the alignment and calibration device of the handsaw as shown in Fig. 7.

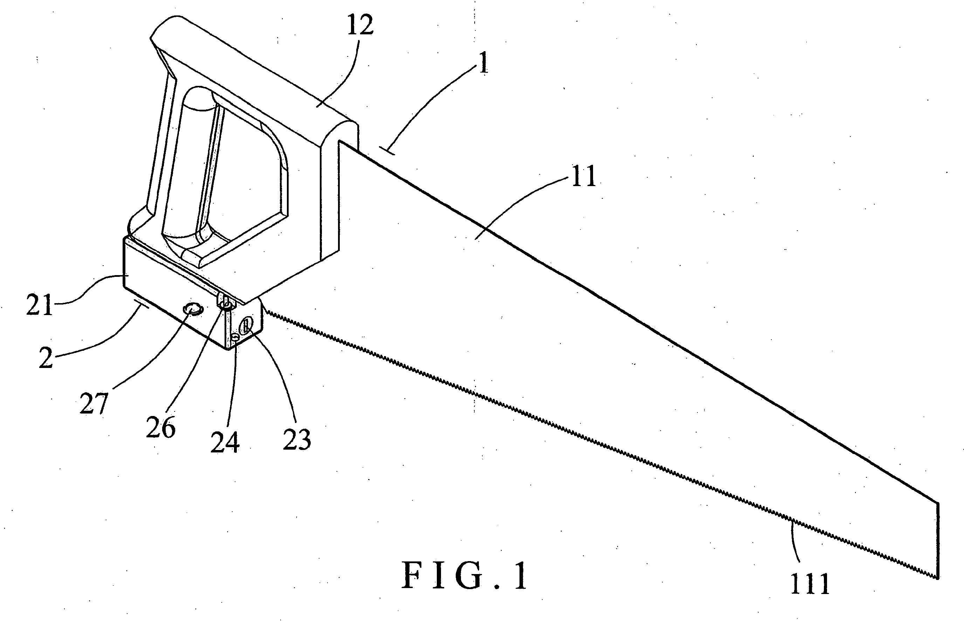

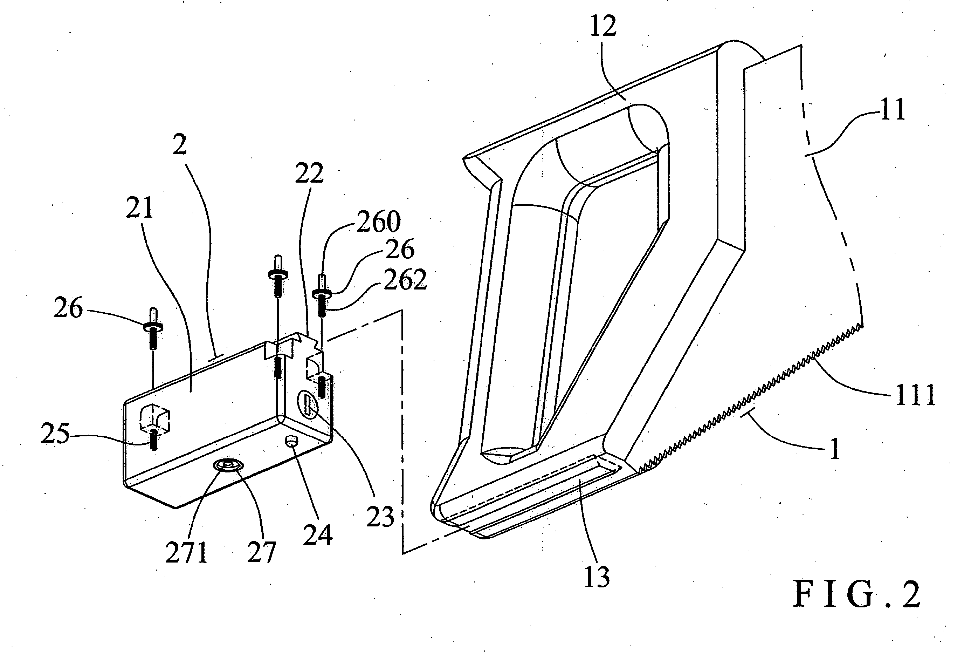

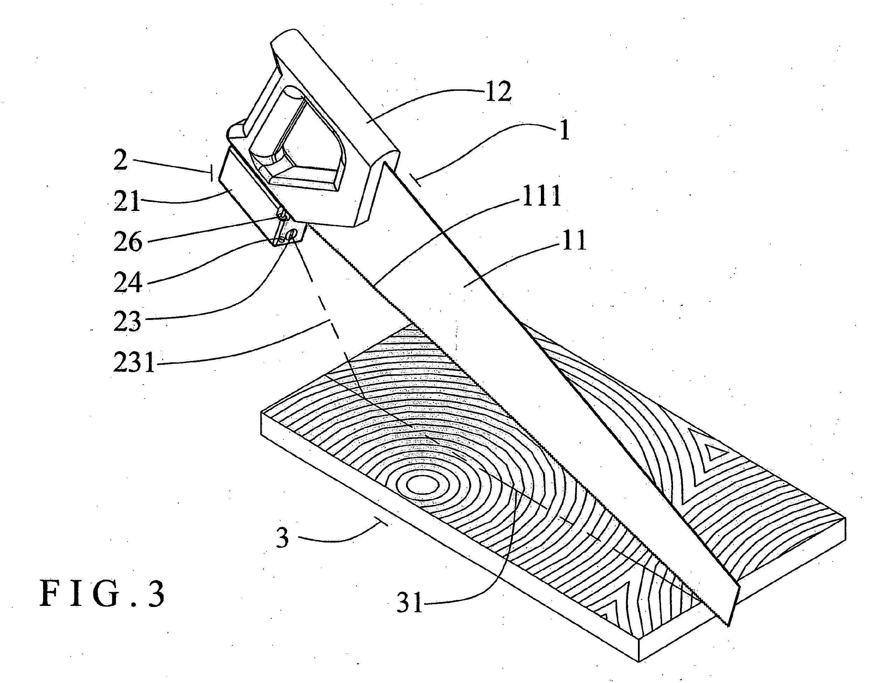

Referring to the drawings and initially to Figs. 1-3, a handsaw in accordance with the preferred embodiment of the present invention comprises a saw body 1, and an alignment and calibration device 2 detachably mount on the saw body 1.

The saw body 1 includes a handle 12 and a blade 11 mounted on the handle 12. The handle 12 of the saw body 1 has a side formed with an elongated mounting recess 13 which has a substantially dovetail-shaped cross-sectional profile and extends in an axial direction of the handle 12.

The alignment and calibration device 2 includes a housing 21 detachably mounted on the handle 12 of the saw body 1, a light emitting member 23 mounted on the housing 21 to emit a linear light beam 231 outwardly, a control switch 24 mounted on the housing 21 and electrically connected to the light emitting member 23 to control operation of the light emitting member 23, a plurality of adjusting screws 26 adjustably mounted on a first side of the housing 21, and a level 27 mounted on a second side of the housing 21.

The housing 21 of the alignment and calibration device 2 has a substantially rectangular shape. The first side of the housing 21 is formed with an elongated mounting block 22 slidably inserted into and detachably mounted in the mounting recess 13 of the handle 12. The mounting block 22 of the housing 21 has a substantially dovetail-shaped cross-sectional profile and extends in an axial direction of the housing 21. The first side of the housing 21 has a periphery formed with a plurality of screw bores 25. Preferably, the housing 21 of the alignment and calibration device 2 has an inside provided with a battery (not shown) and a circuit board (not shown) connected between the control switch 24 and the light emitting member 23.

Each of the adjusting screws 26 of the alignment and calibration device 2 has a threaded first end 262 screwed into a respective screw bore 25 of the housing 21 and a second end 260 protruding outwardly from the mounting block 22. Each of the adjusting screws 26 of the alignment and calibration device 2 is rotatable relative to the housing 21 to adjust a position of the second end 260 of each of the adjusting screws 26.

The level 27 of the alignment and calibration device 2 is hidden in and flush with the first side of the housing 21 and has an inside provided with a movable bubble 271 which is located at a central position of the level 27 when the housing 21 of the alignment and calibration device 2 is disposed at a horizontal state.

The control switch 24 of the alignment and calibration device 2 is movable on and partially protrudes from the second side of the housing 21.

The light emitting member 23 of the alignment and calibration device 2 is hidden in and flush with an end face of the housing 21. The linear light beam 231 of the light emitting member 23 of the alignment and calibration device 2 extends in an axial direction of the blade 11 and aligns with a lower edge 111 of the blade 11. Preferably, the linear light beam 231 of the light emitting member 23 is a laser light beam and has a planar shape.

In operation, again referring to Figs. 1-3, when the control switch 24 of the alignment and calibration device 2 is pressed inwardly, the light emitting member 23 is turned on to emit the linear light beam 23 1, so that the linear light beam 231 of the light emitting member 23 is projected onto a surface of a workpiece 3 to align with a sawing line 31 of the workpiece 3. Thus, the linear light beam 231 of the light emitting member 23 and the lower edge 111 of the blade 11 form a guide line which is in alignment with the sawing line 31 of the workpiece 3, so that a worker can move the blade 11 in the direction indicated by the sawing line 31 of the workpiece 3 by guidance of the linear light beam 231 of the light emitting member 23 so as to cut the workpiece 3 exactly and smoothly, thereby facilitating the worker sawing the workpiece 3, and thereby enhancing the working efficiency of the blade 11.

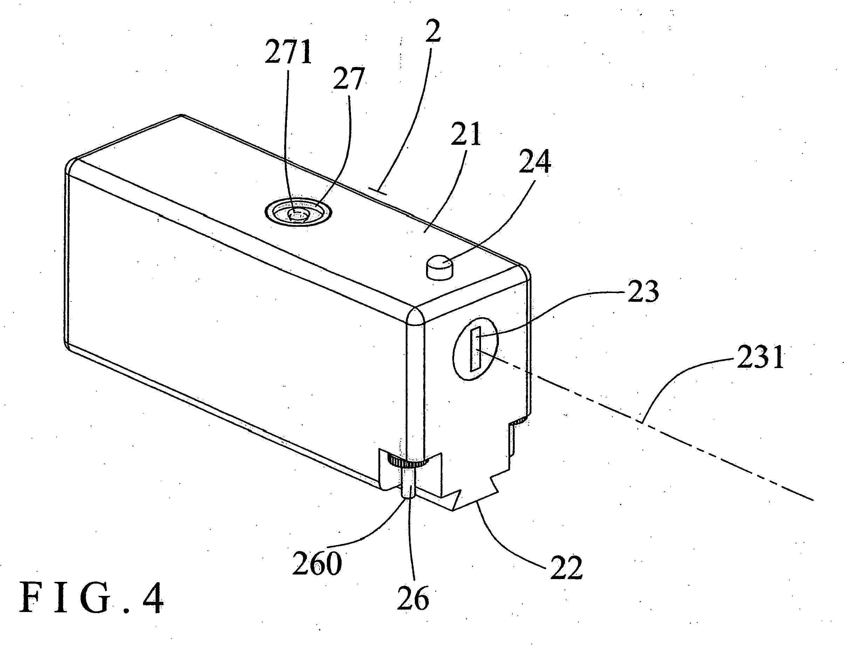

Alternatively, referring to Figs. 4-8 with reference to Figs. 1-3, the mounting block 22 of the housing 21 is detached from the mounting recess 13 of the handle 12 to detach the alignment and calibration device 2 from the handle 12 of the saw body 1 so that the alignment and calibration device 2 is operated individually as shown in Fig. 4 when the alignment and calibration device 2 is detached from the saw body 1.

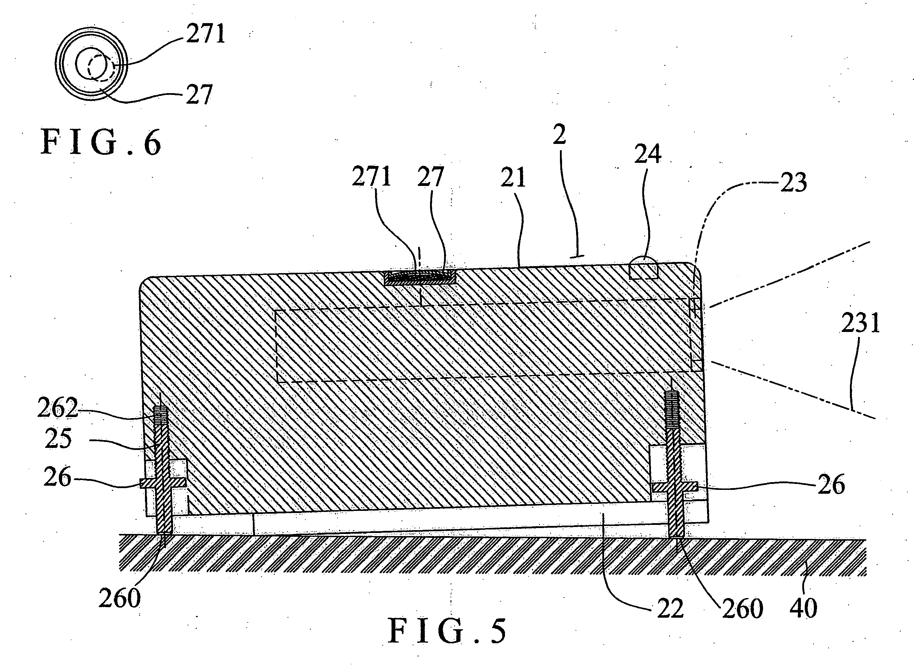

As shown in Figs. 5 and 6, when the housing 21 of the alignment and calibration device 2 is placed on a plane 40, the second end 260 of each of the adjusting screws 26 is rested on the plane 40. Thus, when the housing 21 of the alignment and calibration device 2 is not disposed at a horizontal state, the bubble 271 is deflected from the central position of the level 27.

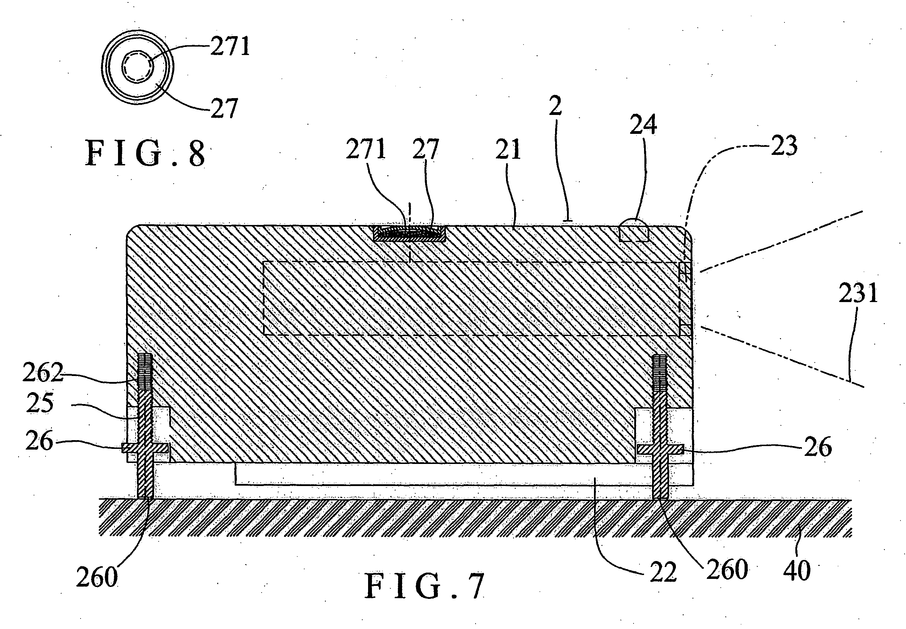

As shown in Figs. 7 and 8, each of the adjusting screws 26 of the alignment and calibration device 2 is rotatable relative to the housing 21 to adjust the position of the second end 260 of each of the adjusting screws 26 until the bubble 271 is located at the central position of the level 27 so that the housing 21 of the alignment and calibration device 2 is disposed at a horizontal state. At this time, when the control switch 24 of the alignment and calibration device 2 is pressed inwardly, the light emitting member 23 is turned on to emit the linear light beam 23 l, so that the linear light beam 231 of the light emitting member 23 is projected onto an object (not shown), such as a vertical wall, door or window of a building, to form a vertical indication line to facilitate the work marking the vertical indication line without needing aid of an indication tool.

Accordingly, when the alignment and calibration device 2 is combined with the saw body 1, the linear light beam 231 of the light emitting member 23 and the lower edge 111 of the blade 11 form a guide line which is in alignment with the sawing line 31 of the workpiece 3 to guide the sawing direction of the blade 11, so that a worker can move the blade 11 in the direction indicated by the sawing line 31 of the workpiece 3 by guidance of the linear light beam 231 of the light emitting member 23 so as to cut the workpiece 3 exactly and smoothly, thereby facilitating the worker sawing the workpiece 3, and thereby enhancing the working efficiency of the blade 11. In addition, when the alignment and calibration device 2 is detached from the saw body 1 and operated individually, the linear light beam 231 of the light emitting member 23 is projected onto an object to form a vertical indication line to facilitate the work marking the vertical indication line without needing aid of an indication tool.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A handsaw, comprising a saw body (1), the saw body including a handle (12) and a blade (11) mounted on the handle;
**characterized by**
an alignment and calibration device (2) detachably mounted on the saw body (1),
the alignment and calibration device (2) including a housing (21) detachably mounted on the handle (12) of the saw body (1), a light emitting member (23) mounted on the housing (21) to emit a linear light beam outwardly, a plurality of adjusting screws (26) adjustably mounted on a first side of the housing (21), and a level (27) mounted on a second side of the housing (21).

2. The handsaw in accordance with claim 1,
**characterized in**
**that** the handle of the saw body (1) has a side formed with an elongated mounting recess (13);
the first side of the housing (21) is formed with an elongated mounting block (22) slidably inserted into and detachably mounted in the mounting recess (13) of the handle (12).

3. The handsaw in accordance with claim 2,
**characterized in**
**that** the mounting recess (13) of the handle (12) has a substantially dovetail-shaped cross-sectional profile;
the mounting block (22) of the housing (21) has a substantially dovetail-shaped cross-sectional profile.

4. The handsaw in accordance with claim 2,
**characterized in**
the mounting recess (13) of the handle (12) extends in an axial direction of the handle;
the mounting block (22) of the housing (21) extends in an axial direction of the housing (21).

5. The handsaw in accordance with claim 2,
**characterized in**
**that** the first side of the housing (21) has a periphery formed with a plurality of screw bores; and
**that** each of the adjusting screws (26) of the alignment and calibration device (2) has a threaded first end screwed into a respective screw bore (25) of the housing (21) and a second end (260) protruding outwardly from the mounting block (22).

6. The handsaw in accordance with claim 5,
**characterized in**
**that** each of the adjusting screws (26) of the alignment and calibration device (2) is rotatable relative to the housing (21) to adjust a position of the second end of each of the adjusting screws (26).

7. The handsaw in accordance with claim 1,
**characterized in**
**that** the level (27) of the alignment and calibration device (2) is hidden in and flush with the first side of the housing (21) and has an inside provided with a movable bubble (271) which is located at a central position of the level (27) when the housing of the alignment and calibration device (2) is disposed at a horizontal state.

8. The handsaw in accordance with claim 1,
**characterized in**
**that** the light emitting member (23) of the alignment and calibration device (2) is hidden in and flush with an end face of the housing (21).

9. The handsaw in accordance with claim 1,
**characterized in**
**that** the linear light beam of the light emitting member (23) of the alignment and calibration device (2) extends in an axial direction of the blade (11) and aligns with a lower edge of the blade (11).

10. The handsaw in accordance with claim 1,
**characterized in**
**that** the alignment and calibration device (2) further includes a control switch (24) mounted on the housing (21) and electrically connected to the light emitting member (23) to control operation of the light emitting member (23).

## Amended claims

### Amended claims in accordance with Rule 137(2) EPC.

**1.** A handsaw comprising a saw body (1) and an alignment and calibration device (2), the saw body including a handle (12) and a blade (11) mounted on the handle, the alignment and calibration device (2) including a housing (21), a light emitting member (23) mounted on the housing (21) to emit a linear light beam outwardly, and a level (27),
**characterized in**
**that** the housing (21) is detachably mounted on the handle (12) of the saw body (1), that a plurality of adjusting screws (26) is adjustably mounted on a first side of the housing (21), and that the level (27) is mounted on a second side of the housing (21).

**2.** The handsaw in accordance with claim 1,
**characterized in**
**that** the handle of the saw body (1) has a side formed with an elongated mounting recess (13);
the first side of the housing (21) is formed with an elongated mounting block (22) slidably inserted into and detachably mounted in the mounting recess (13) of the handle (12) .

**3.** The handsaw in accordance with claim 2,
**characterized in**
**that** the mounting recess (13) of the handle (12) has a substantially dovetail-shaped cross-sectional profile;
the mounting block (22) of the housing (21) has a substantially dovetail-shaped cross-sectional profile.

**4.** The handsaw in accordance with claim 2,
**characterized in**
the mounting recess (13) of the handle (12) extends in an axial direction of the handle;
the mounting block (22) of the housing (21) extends in an axial direction of the housing (21).

**5.** The handsaw in accordance with claim 2,
**characterized in**
**that** the first side of the housing (21) has a periphery formed with a plurality of screw bores; and
**that** each of the adjusting screws (26) of the alignment and calibration device (2) has a threaded first end screwed into a respective screw bore (25) of the housing (21) and a second end (260) protruding outwardly from the mounting block (22).

**6.** The handsaw in accordance with claim 5,
**characterized in**
**that** each of the adjusting screws (26) of the alignment and calibration device (2) is rotatable relative to the housing (21) to adjust a position of the second end of each of the adjusting screws (26).

**7.** The handsaw in accordance with claim 1,
**characterized in**
**that** the level (27) of the alignment and calibration device (2) is hidden in and flush with the first side of the housing (21) and has an inside provided with a movable bubble (271) which is located at a central position of the level (27) when the housing of the alignment and calibration device (2) is disposed at a horizontal state.

**8.** The handsaw in accordance with claim 1,
**characterized in**
**that** the light emitting member (23) of the alignment and calibration device (2) is hidden in and flush with an end face of the housing (21).

**9.** The handsaw in accordance with claim 1,
**characterized in**
**that** the linear light beam of the light emitting member (23) of the alignment and calibration device (2) extends in an axial direction of the blade (11) and aligns with a lower edge of the blade (11).

**10.** The handsaw in accordance with claim 1,
**characterized in**
**that** the alignment and calibration device (2) further includes a control switch (24) mounted on the housing (21) and electrically connected to the light emitting member (23) to control operation of the light emitting member (23) .
